# EUROPÄISCHE PATENTSCHRIFT

(11) **EP 3 776 110 B1**
(45) Veröffentlichungstag und Bekanntmachung des Hinweises auf die Patenterteilung: **23.03.2022**
(21) Anmeldenummer: 19725838.7
(22) Anmeldetag: 09.04.2019
(51) Int. Cl.: G05B 19/401, B23Q 17/24, B23C 3/12, B24B 9/00, B21D 53/30, B60B 21/00, B60B 3/00

(54) **VERFAHREN ZUR ERSTELLUNG VON 3D-BEARBEITUNGSDATEN EINER KFZ-FELGE**
METHOD FOR GENERATING 3D MACHINING DATA OF A MOTOR VEHICLE RIM
PROCÉDÉ DE CRÉATION DE DONNÉES D'USINAGE 3D D'UNE JANTE DE VÉHICULE AUTOMOBILE

(30) Priorität: 13.04.2018 AT 503192018
(43) Veröffentlichungstag der Anmeldung: 17.02.2021
(73) Patentinhaber: ALPINE METAL TECH GmbH, 4844 Regau (AT)
(72) Erfinder: HÖCHSMANN, Roland, 4861 Gampern (AT)
(74) Vertreter: Burger, Hannes
(86) Internationale Anmeldenummer: PCT/AT2019/060120
(87) Internationale Veröffentlichungsnummer: WO 2019/195870

(56) Entgegenhaltungen:
- WO-A1-98/02717
- DE-A1-102016 121 058

## Beschreibung

Die Erfindung betrifft ein Verfahren zur Erstellung von 3D-Bearbeitungsdaten einer vorbearbeiteten, insbesondere dreh- und/oder fräsbearbeiteten Kfz-Felge, für eine nachfolgende Bearbeitung.

Die DE 10 2016 121058 A1 beschreibt eine Werkzeugmaschine zum Entfernen von Grat an einem Werkstück allgemeiner Art. Dabei wird mittels mindestens einem optischen Sensor ein Bild eines zu bearbeitenden Werkstücks aufgenommen. Eine Speichereinheit ist zum Speichern einer Forminformation eines nicht bearbeiteten Werkstücks vorgesehen, welche Forminformation von dem mindestens einen optischen Sensor erlangt wird. Eine weitere Speichereinheit ist zum Speichern einer Forminformation eines bearbeiteten Werkstücks vorgesehen. Eine Gratinformation-Berechnungseinheit ist zum Erkennen eines Grats eingerichtet, indem sie die Forminformation des nicht bearbeiteten Werkstücks mit der Forminformation des bearbeiteten Werkstücks vergleicht. Eine Gratbestimmungseinheit bestimmt einen am Werkstück vorhandenen Grat in Bezug auf Position und/oder Richtung des Grats gegenüber dem Werkstück. Eine Bearbeitungsverfahren-Beurteilungseinheit entscheidet dann auf Basis des Ergebnisses der Gratbestimmungseinheit, ob eine Entgratung mit einem Werkzeug der Werkzeugmaschine durchgeführt wird oder nicht. Mögliche Entscheidungsergebnisse sind dabei keine Entgratung, eine Entgratung durch die Werkzeugmaschine, oder eine Entgratung durch einen gesonderten Roboter, der in der Lage ist, eine Entgratung durchzuführen. Die Werkzeugmaschine umfasst weiters eine Bearbeitungsweg-Erzeugungseinheit, die einen Bearbeitungsweg zum Entfernen des Grats erzeugt, der als ein Grat beurteilt wurde, der durch einen Entgratung mit dem Werkzeug vom Werkstück zu entfernen ist.

Die WO 98/02717 A1 beschreibt ein Entgratungsverfahren, bei dem ein Laser auf die Kante eines Werkstücks gerichtet wird, so dass die Position einer ersten Oberfläche und einer zweiten, an die erste Oberfläche in einem Winkel anschließende Oberfläche festgestellt werden kann. Zudem wird eine Extrapolation einer Schnittlinie zwischen der ersten Oberfläche und der zweiten Oberfläche ausgeführt, wobei die Position der zweiten Oberfläche gemeinsam mit einem vorhanden Grat ermittelt wird, woraufhin die Position der ersten Oberfläche ohne den Grat ermittelt wird. Die Extrapolation umfasst dabei eine Berechnung der Ausdehnung der ersten Oberfläche gegen die zweite Oberfläche. Auf diese Weise wird eine Berechnung der Schnittlinie zwischen der ersten Oberfläche und der zweiten Oberfläche ausgeführt und nachfolgend wird der Grat entlang der berechneten Schnittlinie entfernt.

Die Herstellung moderner Kfz-Felgen unterliegt höchsten Anforderungen hinsichtlich Belastbarkeit, Positionsgenauigkeit der Bohrungen, und zunehmend der Oberflächengüte. Dabei spielen die Herstellungsverfahren und einzelnen Bearbeitungsschritte eine entscheidende Rolle. Die Urformung erfolgt üblicherweise über einen Gießprozess oder Schmiedeprozess. Die Bearbeitung und/oder Herstellung von Öffnungen, wie z.B. Mittelloch, Bolzenbohrungen, Felgenfenstern und dergleichen kann durch geeignete Dreh-, Bohr- und/oder Fräsbearbeitung erfolgen. Bei der Fertigung von Kfz-Felgen kann es durch den Gieß- oder Schmiedeprozess und/oder die nachfolgenden Bearbeitungsschritte zur Entstehung lokaler, komplexer Eigenspannungszustände kommen. Diese können unter anderem zu unerwünschtem Verzug der Kfz-Felge führen.

In der Regel ist eine Oberflächenbearbeitung der Kfz-Felge erforderlich. Dabei werden neben dem Umfang, also dem Reifensitz, auch die Innenseite, also die achszugewandte Seite, wie auch im Besonderen die Außen- bzw. Sichtseite bearbeitet. Die Oberflächenbearbeitung kann dabei eine Reihe von Fertigungsschritten umfassen. In der Regel wird eine Drehbearbeitung der Innen- und Außenseite durchgeführt. Hierbei kann es zur Ausbildung eines Grates an den Kanten, vor allem in Bearbeitungsrichtung, kommen.

Bislang wird die Entfernung dieses Grates in der Regel durch Bürsten vorgenommen, kann jedoch auch durch Schleifen oder auch Sandstrahlen erfolgen. Dabei kann es jedoch auch zum Einebnen des Grates, anstatt der vollständigen Entfernung kommen.

Es ist somit die Aufgabe der vorliegenden Erfindung die Nachteile des Standes der Technik zu überwinden und ein Verfahren zur Verfügung zu stellen, mittels derer ein Benutzer in der Lage ist, eine relativ einfache, sichere und zeitsparende Nachbearbeitung und/oder Kantenbearbeitung vorzunehmen.

Diese Aufgabe wird durch ein Verfahren gemäß den Ansprüchen gelöst.

Der vorliegenden Erfindung liegt die jüngere Erkenntnis zugrunde, dass die Nachbearbeitung der Oberflächen der Innen- und Außenseite und hierbei insbesondere der Kanten der Speichen eine entscheidende Rolle für die Lebensdauer, das optische Erscheinungsbild und unter Umständen sogar die Sicherheit spielen kann. Der Grat an den Kanten einer Kfz-Felge kann neben einer Sichtbeeinträchtigung auch beim Lackieren der Kfz-Felge zu ungewünschten Problemen führen, da es zur Ausbildung von Kantenkorrosion durch lokales Eindringen von z.B. Wasser und insbesondere salzhaltigem Wasser durch Streusalz im Winter kommen kann.

Um möglichst nur den Grat und möglichst wenig darunter liegendes Material der Kante zu entfernen oder aber auch eine vorgebbare Fase oder Kantenverrundung aufzubringen, ist eine genaue Kenntnis der Eingangskontur der Kfz-Felge erforderlich. Unter Eingangskontur wird im Kontext dieser Erfindung die 3D-Form von zumindest Teilen der vorbearbeiteten, also gedrehten und/oder gefrästen, Kfz-Felge verstanden. Es ist es daher gewünscht, möglichst genaue dreidimensionale (3D) Konturdaten der Eingangskontur bereit zu stellen um 3D-Bearbeitungsdaten für einen, möglichst mehrachsigen, Bearbeitungsvorgang generieren zu können. Die Erfassung derartiger 3D-Konturdaten, also die Bestimmung von 3D-Ist-Positionsdaten der Kanten oder Oberflächen ist jedoch durch die undefinierte Gratausbildung nicht möglich. Taktile oder auch optische Erfassung der gratbehafteten Kanten führt zu einer verfälschen Annahme der Kantenposition. Hinzu kommt, dass durch die Vorbearbeitung und deren Einfluss auf einen etwaigen Verzug die lokale Lage und Geometrie unterschiedlicher Kfz-Felgen, und hier insbesondere der Speichen, sehr unterschiedlich sein kann. Somit kann nicht einfach eine globale Annahme oder Annäherung der Kantenlage für alle Speichen getroffen werden.

Die Erfindung betrifft ein Verfahren zur Erstellung von 3D-Bearbeitungsdaten einer dreh- und/oder fräsbearbeiteten Kfz-Felge, mit mehreren Verfahrensschritten, welche das Bereitstellen einer mehrere Speichen aufweisenden, Kfz-Felge mit einer Eingangskontur und einer Außen- bzw. Sichtseite und einer Innen- bzw. Achsseite und zumindest an einer Kante anhaftenden Grat, das Bereitstellen eines 3D-Modells der Soll-Geometrie der fertig zu bearbeitenden Kfz-Felge in einer Anlagensteuerung, die Vermessung der Innen- und Außenseite an vorgebbaren Messpositionen an zumindest zwei, bevorzugt drei, Oberflächen der jeweiligen Speichen zur Erfassung von 3D-Ist-Positionsdaten mittels zumindest eines optischen Erfassungsmittels, den Abgleich der erfassten 3D-Ist-Positionsdaten mit dem 3D-Modell der Soll-Geometrie und rechnerische Vervollständigung der Eingangskontur durch Extra- und/oder Interpolation der 3D-Ist-Positionsdaten, die Berechnung von 3D-Bearbeitungsdaten der Fertigkontur anhand vervollständigter Eingangskontur und die Bereitstellung der SD-Bearbeitungsdaten in der Anlagensteuerung umfassen.

Ein etwaig vorhandener Grat ist normalerweise in Richtung der ursprünglichen Bearbeitungsrichtung ausgebildet und haftet dabei z.B. bei einer vorangegangenen Drehbearbeitung im Wesentlichen in Umfangsrichtung an den Kanten der Kfz-Felge, insbesondere den Kanten der Speichen an. Als Speichen werden hierbei auch Stege oder ähnliche Begriffe zusammengefasst, welche eine im Wesentlichen radiale Erstreckung aufweisen. Die Speichen sind untereinander in Umfangsrichtung durch Öffnungen, wie z.B. Felgenfenster, getrennt. Auch an diesen Längskanten, also an den Felgenfenstern bzw. deren Felgenfensterkonturen, kann u.U. ein Grat in Umfangsrichtung ausgebildet sein. Die Bestimmung der Kantenlage wird lokal, also an jeder Speiche und/oder deren Zwischenräumen, durch die Berechnung in der Anlagensteuerung oder einem eigenen Rechner vorgenommen. Dies erlaubt, dass nicht alle Kanten und Oberflächen einer Kfz-Felge vermessen werden müssen und bietet den großen Vorteil, dass eine verfälschte Kantenlage durch die "Mitvermessung" des Grates vermieden werden kann.

Unter Vervollständigung der Eingangskontur ist im Rahmen der Erfindung nicht zwingend die gesamte Eingangskontur der Kfz-Felge gemeint, da es unter gewissen Umständen ausreichend sein kann, wenn lediglich die für die nachfolgende Nachbearbeitung relevanten Teile der Kfz-Felge als Eingangskontur und später zur Berechnung der 3D-Bearbeitungsdaten und/oder der Fertigkontur betrachtet werden. Auf diese Weise kann sehr effizient und schnell vermessen, berechnet und später nachbearbeitet werden.

Überraschenderweise kann dieses Verfahren relativ einfach unter Vermessung der ersten Innen- oder Außenseite mittels zumindest eines optischen Erfassungsmittels und zeitgleichem oder daran anschließenden Vermessung der zweiten, der ersten Innen- oder Außenseite gegenüberliegenden, Innen- oder Außenseite durchgeführt werden. Die Erhebung dieser Messdaten, also der 3D-Ist-Positionsdaten der Kfz-Felge wird an vorgebbaren Messpositionen durchgeführt und sollte zumindest zwei, bevorzugt mehrere, vermessene Oberflächen jeder Speiche umfassen. Durch die Bereitstellung eines, bevorzugt computergestützten, 3D-Modells der Soll-Geometrie der Kfz-Felge, kann auf die lokale Abweichung und/oder Lage der 3D-Ist-Positionsdaten der jeweiligen Speichen im Raum, bzw. zu einer Bezugskoordinate, rückgerechnet werden, wodurch sich nach und nach ein nahezu vollständiges Abbild der Eingangskontur ergibt. Ein wesentlicher Vorteil ist somit, dass die durch Abschattung ungenau erfassten, gratbehafteten Kanten in der Berechnung der Eingangskontur durch ein "Matching", also ein "Hineinlegen" der vermessenen Oberflächen in das 3D-Modell der Soll-Geometrie, relativ einfach ermittelt werden können. Dabei können durch die Vermessung der Oberflächen, die erfassten 3D-Ist-Positionsdaten zu einem fiktiven Zerlegen in lokale Einzelquerschnitte der Kfz-Felge verwendet werden. Es ist einfach vorzustellen, dass eine an zumindest zwei Seiten, also in diesem Fall Oberflächen, erfasste Umfangslinie bzw. Kontur, virtuell "in" einen lokalen Querschnitt der Soll-Geometrie eingepasst werden kann. Die Messpositionen sollten daher ausreichend zahlreich in Radial- und Umfangsrichtung gewählt werden, um eine möglichst hohe Messgenauigkeit zu erlangen. Auf diese Weise sind auch jene Oberflächen und/oder Kanten, welche einem optischen Erfassungsmittel z.B. durch Abschattung, komplexe Kfz-Felgengeometrien oder anderer geometrischer Einschränkungen nicht zugänglich sind, durch Inter- bzw. Extrapolation zugänglich. Diese Extrapolations- und/oder Interpolationspositionen dienen der Vervollständigung der Eingangskontur in Form von Punkten, Linien oder auch Flächen. In gleicher Weise können somit auch Hinterschneidungen, welche normalerweise nicht einfach optisch erfassbar sind, in die Berechnung der Eingangskontur miteinbezogen werden.

Erfindungsgemäß erfolgt daher eine kontaktlose Ermittlung von Teilen der Eingangskontur, welche durch den Abgleich der erfassten 3D-Positionsdaten mit dem 3D-Modell der Soll-Geometrie zu einer Vervollständigung der Eingangskontur von zumindest Teilen der Kfz-Felge genutzt werden. Auf diese Weise wird die Berechnung von 3D-Bearbeitungsdaten einer vorgebbaren Fertigkontur möglich, welche die genaue Position und Lage der zu bearbeitenden Kanten für den nachfolgenden Bearbeitungsschritt berücksichtigt. Die 3D-Bearbeitungsdaten der Fertigkontur können vorgebbare Fasen und/oder Kantenverrundungen aufweisen und somit komplett für eine Kfz-Felge, oder gegebenenfalls nur Teile davon, berechnet werden. Die 3D-Bearbeitungsdaten werden in der Anlagensteuerung bereitgestellt und sind einem, bevorzugt mehrachsigen, Bearbeitungszentrum, wie etwa einem Fräser oder Laser zugänglich.

Die Auswahl und Definition zumindest eines geeigneten Koordinatensystems obliegt dem Können des Fachmanns. Es wird daher hier nicht näher darauf eingegangen, wie eine Festlegung von Bezugskoordinaten und/oder eine etwaig erforderliche Koordinatentransformation von z.B. dem Koordinatensystem der Aufspannvorrichtung in das Koordinatensystem der Kfz-Felge oder umgekehrt, durchgeführt werden kann. In gleicher Weise wird darauf verzichtet, die möglichen Anordnungen des zumindest einen optischen Erfassungsmittels eingehend zu diskutieren, da diese Anordnung in Abhängigkeit der jeweils örtlichen Gegebenheiten, Anlagen- und/oder Kfz-Felgengeometrie, und dergleichen vom Fachmann gemäß der erfindungsgemäßen Anleitung zu optimieren sind.

Des Weiteren kann es zweckmäßig sein, wenn die Vervollständigung der 3D-Ist-Positionsdaten der Eingangskontur der, in ursprünglicher Bearbeitungsrichtung abgewandten, gratbehafteten Kanten, durch Extra- und/oder Interpolation der erfassten 3D-Ist-Positionsdaten der in ursprünglicher Bearbeitungsrichtung nächstliegenden Seiten der Speichen anhand des 3D-Modells der Soll-Geometrie erfolgt.

Auf diese Weise wird vergleichsweise einfach und schnell die Vervollständigung der Eingangskontur möglich und messtechnische Ungenauigkeiten der gratbehafteten Kanten effizient vermeidbar.

Ferner kann vorgesehen sein, dass während der Vermessung der Innen- und/oder Außenseite eine zusätzliche Erfassung der 3D-Ist-Positionsdaten von, sich im Wesentlichen in Umfangsrichtung erstreckenden, Längskonturen, insbesondere Längskanten, vorzugsweise Felgenfensterkonturen, erfolgt und in die Berechnung der 3D-Bearbeitungsdaten miteinbezogen wird.

Die zusätzliche Erfassung der Oberflächen, welche die Felgenfenster begrenzen, kann auf einfache Art analog zur obigen Beschreibung zur Ermittlung der Längskonturen in Umfangsrichtung genutzt werden. Durch die Verknüpfung der 3D-Ist-Positionsdaten der Felgenfensterkonturen mit den 3D-Ist-Positionsdaten der Speichen kann die Vervollständigung der Eingangskontur auch in Umfangsrichtung durchgeführt werden. Da mit dem gleichen Messaufbau gearbeitet werden kann, ist eine sehr schnelle und präzise Vermessung bzw. Berechnung und eine Erhöhung der Präzision bei der Bestimmung der Eingangskontur möglich.

Darüber hinaus kann vorgesehen sein, dass bei der Vervollständigung der 3D-Ist-Positionsdaten der Eingangskontur etwaige, der Vermessung durch das zumindest eine optische Erfassungsmittel unzugängliche Hinterschneidungen, aus dem 3D-Modell der Soll-Geometrie z.B. durch Extrapolation miteinbezogen werden.

Durch die Vermessung der Speichen und optional der Längskonturen der Kfz-Felge wird ein 3D-Matching aufgrund der hohen Qualität der 3D-Ist-Positionsdaten möglich. Dies bietet die Möglichkeit Hinterschneidungen aus dem 3D-Modell der Soll-Geometrie der Kfz-Felge sehr genau in ihrer Lage und/oder der Position etwaigen Grates an Kanten zu berechnen. Eine ansonsten schwer oder sogar für ein Erfassungsmittel unzugängliche Hinterschneidung kann somit relativ einfach mitberechnet bzw. "gematcht" werden, wodurch unter anderem die Messzeit verringert werden kann. Ebenso kann die Qualität der Nachbearbeitung in diesen schwer zugänglichen Bereichen erhöht werden.

Vorteilhaft ist auch eine Ausprägung, gemäß welcher vorgesehen sein kann, dass zur Vermessung der Innen- und/oder Außenseite zumindest ein optisches Erfassungsmittel, welches einen Punkt- und/oder Linienlaser und/oder Streifenlichtprojektor umfasst, verwendet wird.

Die Verwendung von Bildkameras, wie etwa CCD-Kameras, und die softwaretechnische Auswertung der Bildinformationen in der Anlagensteuerung sind grundsätzlich denkbar. Allerdings hat sich der Einsatz von Punkt- und/oder Linienlaser als sehr zeiteffizient, günstig, und vor allem hochpräzise erwiesen. Je nach erforderlicher Messpositionsgröße, -anordnung und - auflösung kann der Fachmann hier die geeignete Wahl treffen. Ebenso kann ein Streifenlicht auf die zu vermessenden Oberflächen geworfen werden und deren Verschiebung in bekannter Weise zur Ermittlung von 3D-Ist-Positionsdaten herangezogen werden. Ein weiterer Vorteil von Punkt- und/oder Linienlasern ist der verringerte Einfluss von Umgebungslicht auf die Messgenauigkeit, welcher durch die Wahl der Wellenlänge des Lasers geschickt unterbunden werden kann. Ferner sind Punkt- und/oder Linienlaser und/oder Streifenlichtquellen relativ gut automatisierbar und effizient mit der Anlagensteuerung bedienbar.

Gemäß einer Weiterbildung ist es möglich, dass die Vermessung der Innen- und/oder Außenseite mittels jeweils zumindest einem optischen Erfassungsmittel, vorzugsweise gleichzeitig, erfolgt.

Hierdurch kann die Anordnung und/oder Ausrichtung des jeweiligen optischen Erfassungsmittels optimal auf die Geometrie der Kfz-Felge ausgerichtet werden und ein "Herumdrehen" der Kfz-Felge entfällt. Außerdem kann die Messzeit deutlich reduziert werden, was im Besonderen durch den gleichzeitigen Einsatz begünstigt wird.

Ferner kann es zweckmäßig sein, wenn vor der Vermessung eine Aufspannung der Kfz-Felge an einer, vorzugsweise mehrachsig beweglichen, Aufspannvorrichtung derart erfolgt, dass eine direkte Sichtverbindung des zumindest einen optischen Erfassungsmittels Oberflächen der Speichen an zumindest einer Innen- und/oder Außenseite gegeben ist.

Die Aufspannvorrichtung kann dabei eine geeignete Spann- oder Greifvorrichtung sein und z.B. von außen radial die Kfz-Felge erfassen. Es ist jedoch auch eine Aufspannung von "innen" an der Kfz-Felge denkbar. Die für die Vermessung relevanten Oberflächen der Speichen und/oder der Längskonturen sollten dabei nicht von der Aufspannvorrichtung verdeckt werden. Dies erlaubt eine zügige Vermessung und macht z.B. den Einsatz von relativ einfachen und preiswerten optischen Erfassungsmitteln möglich, da die Erfassung der 3D-Ist-Positionen der relevanten Teile der Kfz-Felge vorgenommen werden kann, ohne das optische Erfassungssystem auf komplexen Bahnbewegungen oder ganz nahe an die Kfz-Felge heranführen zu müssen. Außerdem kann durch die beschriebene Aufspannung ein Umspannen bei beidseitiger Vermessung der Kfz-Felge vermieden werden, was die Messgenauigkeit erhöht und die Messzeit deutlich verringert.

Darüber hinaus kann vorgesehen sein, die Aufspannung an der Mittenbohrung, vorzugsweise unter zumindest teilweiser Kontaktierung einer an die Mittenbohrung in Radialrichtung angrenzenden Anlagefläche, durchgeführt wird.

Eine derartige Aufspannung hat den Vorteil, dass durch den zentralen Eingriff der Aufspannvorrichtung die relevanten Oberflächen zur Vermessung sehr gut von innen bzw. außen für das optische Erfassungsmittel zugänglich sind. Es ist dabei denkbar, dass z.B. ein Mehrbackenspannfutter oder ein Spanndorn, in der Mittenbohrung platziert wird. Eine solche Aufspannvorrichtung kann auch dazu verwendet werden eine mehrachsige Bewegung der Kfz-Felge einzuleiten. Zur Erhöhung der Sicherheit und Verbesserung der Kontaktbedingungen kann eine teilweise Kontaktierung oder auch ein Gegendruck an der Anlagefläche in Richtung der Rotationsachse durchgeführt werden.

Des Weiteren kann vorgesehen sein, dass zur Vermessung der Innen- und/oder Außenseite eine Bewegung der Kfz-Felge relativ zum zumindest einen optischen Erfassungsmittel durchgeführt wird.

Dabei kann vorteilhafterweise eine zuvor beschriebene Aufspannvorrichtung verwendet werden, mit welcher die Kfz-Felge rotiert und/oder relativ zum zumindest einen optischen Erfassungsmittel verschoben werden kann. Auf diese Weise ist es nicht erforderlich, dass alle zu vermessenden Bereiche gleichzeitig vom optischen Erfassungsmittel erfasst werden, sondern dass einzelne Segmente nacheinander vermessen werden können. Dies erlaubt eine günstige und einfache Ausgestaltung des optischen Erfassungsmittels.

Gemäß einer besonderen Ausprägung ist es möglich, dass zur Vermessung der der Innen- und/oder Außenseite eine Bewegung des zum zumindest einen optischen Erfassungsmittel relativ zur Kfz-Felge durchgeführt wird.

Diese Bewegung des zumindest einen optischen Erfassungsmittels kann analog zur Bewegung der Kfz-Felge als eine Drehbewegung und/oder Verschiebung ausgeführt werden. Es kann in gewissen Fällen vorteilhaft sein, eine Bewegung der Kfz-Felge und gleichzeitig des optischen Erfassungsmittels durchzuführen, um besonders komplizierte Oberflächen der Kfz-Felge vermessen zu können. Auch eine Bewegung des optischen Erfassungsmittels alleine ist denkbar. Dabei kann das zumindest eine optische Erfassungsmittel sowohl innerhalb als auch außerhalb des Felgendurchmessers bewegt werden, wodurch die Vielfalt der möglichen Anordnungen steigt. Das zumindest eine optische Erfassungsmittel kann z.B. zur Erhöhung der Sensitivität eines optischen Sensors in einen Nahebereich der zu vermessenden Messposition gebracht werden.

Entsprechend einer vorteilhaften Weiterbildung kann vorgesehen sein, dass die Kfz-Felge im Anschluss an die Bereitstellung der 3D-Bearbeitungsdaten und/oder der Fertigkontur in der Anlagensteuerung während der Herstellung der Fertigkontur auf der Aufspannvorrichtung verbleibt.

Besonders vorteilhaft kann hierfür die zuvor beschriebene Aufspannvorrichtung auch für die nachfolgende Nachbearbeitung verwendet werden, wodurch ein Umspannen der Kfz-Felge entfällt. Das somit direkte Weiterarbeiten bzw. Nachbearbeiten der Kfz-Felge durch die Verwendung eines gleichzeitigen Bearbeitungs- bzw. Aufspanntisches oder einer sinngemäß ausgebildeten Aufspannvorrichtung spart Zeit und erhöht die Präzision der Bearbeitung.

Ferner kann vorgesehen sein, dass die Bereitstellung des 3D-Modells der Soll-Geometrie durch Vermessung eines Musterteils erfolgt.

Diese Maßnahme kann bei einer "Erstvermessung" eines Typs einer Kfz-Felge dazu dienen, besonders schnell und ohne großen Rechenaufwand eine bislang unbekannte Soll-Geometrie als 3D-Modell zu generieren. Ebenso kann diese Maßnahme zur Qualitätskontrolle in regelmäßigen Abständen wiederholt werden um die Sensorik zu überprüfen, da auf diese Weise in den relevanten Messpositionen keine Abweichung zu detektieren sein sollte.

Insbesondere kann es vorteilhaft sein, wenn im Anschluss an die Bereitstellung der Fertigkontur in der Anlagensteuerung als 3D-Bearbeitungsdaten die nachfolgende Herstellung der Fertigkontur mittels einer Fräs- oder Laserbearbeitung durchgeführt wird.

Es hat sich gezeigt, dass die Nachbearbeitung zur Gratentfernung und/oder Kantengeometrieoptimierung besonders effizient über eine Fräs- oder Laserbearbeitung durchgeführt werden kann, da sich die Gesamtlänge der relevanten, zu entgratenden Fertigkontur auf mehrere Meter Länge erstrecken kann. Hierbei ist der Einsatz eines mehrachsig beweglichen Bearbeitungswerkzeugs von großem Vorteil, welches nunmehr relativ einfach durch die in der Anlagensteuerung bereitgestellten 3D-Bearbeitungdaten angesteuert werden kann. Somit kann die Anstellung des Bearbeitungswerkzeugs, wie etwa der Anstellwinkel oder die Ausrichtung eines Fräsers oder Lasers, optimiert werden und eine kosten und zeitsparende Nachbearbeitung der Kfz-Felge wird ermöglicht.

Zum besseren Verständnis der Erfindung wird diese anhand der nachfolgenden Figuren näher erläutert.

Es zeigen jeweils in stark vereinfachter, schematischer Darstellung:
- Fig. 1: schematische Schnittdarstellung einer Kfz-Felge;
- Fig. 2: schematische Querschnittsdarstellung einer Speiche entlang A-A' aus Fig.1 zur Ermittlung von 3D-Bearbeitungsdaten: (a) Guss-/Urform, (b) vorbearbeitete Eingangskontur, (c) Beispiele für Lage-/Positionsabweichungen einer Speiche, (d) korrespondierender Querschnitt durch 3D-Modell der Soll-Geometrie, (e) Fertigkontur;
- Fig. 3: schematische Querschnittsdarstellung einer Speiche mit Messpositionen, abgeschatteten Bereichen und Extra-/Interpolationspositionen zur Ermittlung der Eingangskontur;
- Fig. 4: schematische Schnittdarstellung einer Kfz-Felge mit berechneten 3D-Bearbeitungsdaten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

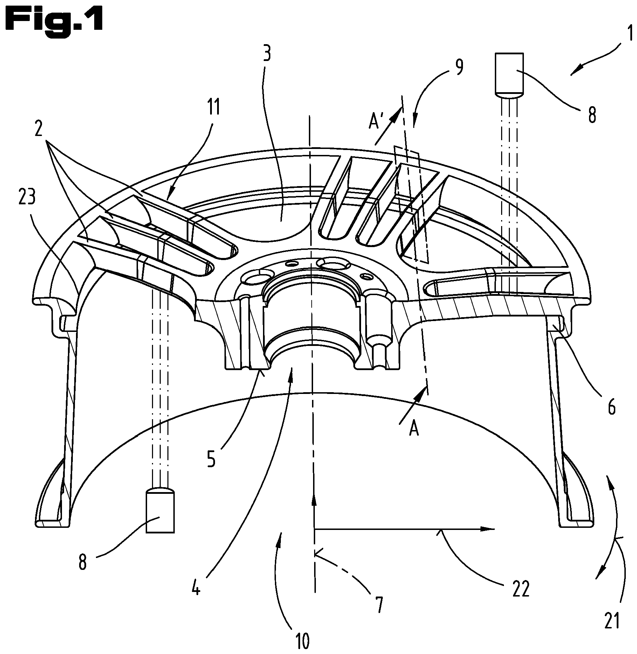

In Fig. 1 ist eine schematische Darstellung einer Kfz-Felge 1 gezeigt. Eine derartige Kfz-Felge 1 umfasst eine Mehrzahl von Speichen 2, welche in Umfangsrichtung 21 durch Öffnungen voneinander beabstandet sind. Die größeren Öffnungen der Kfz-Felge 1 werden als Felgenfenster 3 bezeichnet. Die Kfz-Felge 1 weist eine Mittenbohrung 4 auf. In Radialrichtung 22 ist angrenzend und umlaufend an die Mittenbohrung 4 auf der Innenseite 10 eine Anlagefläche 5 angedeutet. Weiters kann aus Fig. 1 ersehen werden, dass jede Speiche eine Mehrzahl von Kanten 11 aufweist. In Umfangsrichtung 21 können Längskanten bzw. Längskonturen 23 verlaufen.

Die Bereitstellung einer derartigen Kfz-Felge 1 erfolgt vorzugsweise mit einer nicht dargestellten Aufspannvorrichtung. Die Kfz-Felge 1 wird dabei derartig aufgespannt, dass zumindest eine Innen- bzw. Achsseite 10 und/oder Außen- bzw. Sichtseite 9 von dem zumindest einem optischen Erfassungsmittel 8 eingesehen werden können. In Fig. 1 ist schematisch eine mögliche Anordnung zweier optischer Erfassungsmittel 8 dargestellt. Vorteilhafterweise erfolgt die Anordnung derart, dass jeweils die Innenseite 10 sowie die Außenseite 9 von jeweils einem optischen Erfassungsmittel 8 vermessen werden können. Besonders bevorzugt erfolgt diese Vermessung gleichzeitig. Die Anordnung der Felge relativ zu dem zumindest einen optischen Erfassungsmittel 8 kann dabei beweglich ausgeführt sein. Das optische Erfassungsmittel 8 kann dabei bevorzugt einen Punkt- oder wie in Fig. 1 angedeutet, einen Linienlaser umfassend, wodurch die dem Erfassungsmittel 8 zugewandten Oberflächen 14 zumindest teilweise vermessen werden können. Wie aus Fig. 1 ersichtlich, können Hinterschneidungen 6 unter Umständen nicht von optischen Erfassungsmittel 8 eingesehen werden. Analog dazu kann es bei der Vermessung der Kfz-Felge 1 an der Innen- und Außenseite 10,9 zu Messungenauigkeiten durch gratbehaftete Kanten 11 und oder schwer für das Erfassungsmittel zugängliche Bereiche kommen.

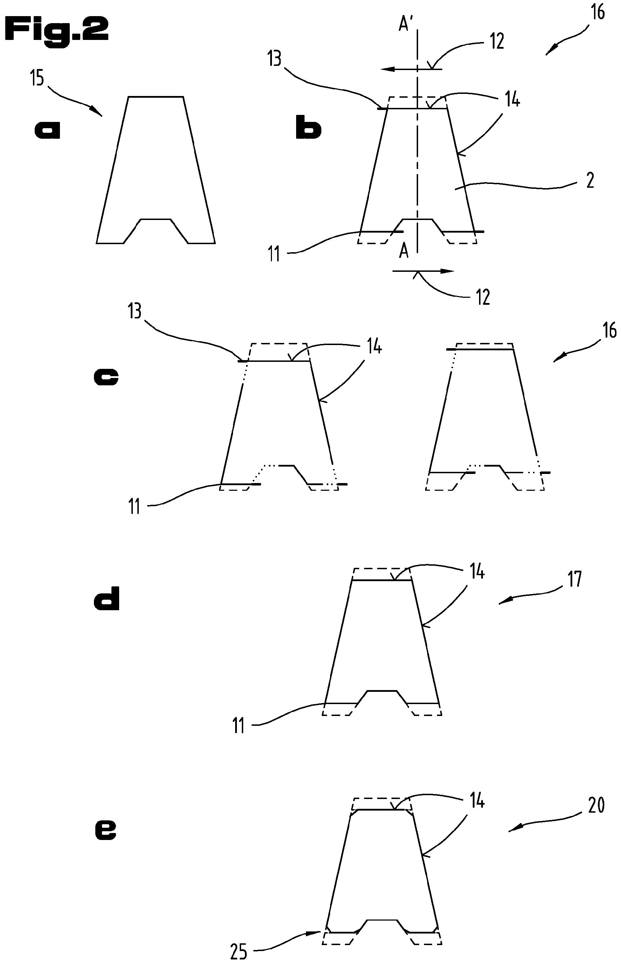

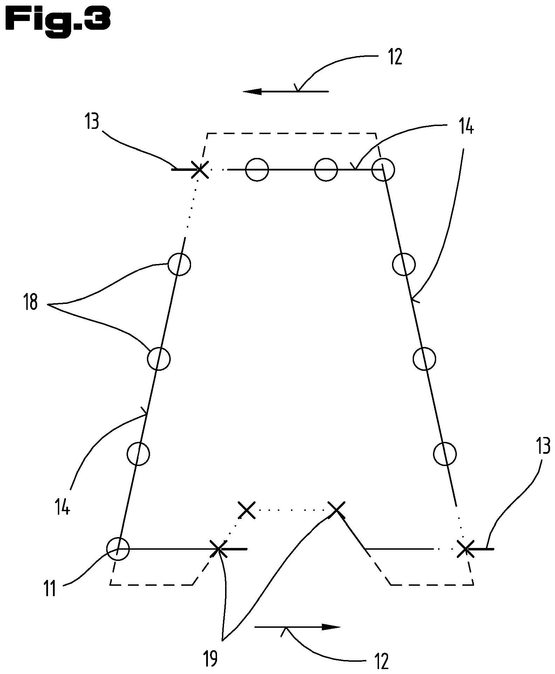

Das erfindungsgemäße Verfahren wird im Folgenden in Fig. 2 und Fig. 3 anhand schematischer Darstellungen eines exemplarischen Querschnitts durch eine Speiche 2 entlang dem Schnitt A-A' aus Fig. 1 dargestellt. In Fig. 2a ist der Querschnitt einer urgeformten Kfz-Felge 1 bzw. einer Speiche 2 ersichtlich. Durch eine Dreh- und/oder Fräsbearbeitung der Kfz-Felge 1 in eine Bearbeitungsrichtung 12 kann es zur Ausbildung eines Grats 13 vor allem an den Kanten 11 der Speichen 2 kommen. In Fig. 2b ist die Ursprungskontur 15 gemäß Fig. 2a strichliert dargestellt. Die Kontur der vorbearbeiteten Kfz-Felge 1, insbesondere der Speiche 2, wird als Eingangskontur 16 bezeichnet. Durch die unterschiedliche Bearbeitungsrichtung 12 der Innenseite 10 und der Außenseite 9 kann die Ausbildung des Grates 13 in unterschiedliche Richtungen erfolgen. Die Ausbildung eines abstehenden Grates 13 ist stark vereinfacht als waagerecht abstehend abgebildet. In der Realität kann der Grat 13 natürlich davon abweichend ausgebildet sein, was jedoch für das erfindungsgemäße Verfahren keine Rolle spielt. Erfindungsgemäß erfolgt eine Vermessung der Innen- und Außenseite 10, 9 an vorgebbaren Messpositionen 18, wie in Fig. 3 verdeutlicht wird. Diese vorgebbaren Messpositionen 18 sind dabei zumindest zwei, bevorzugt drei oder mehreren, Oberflächen 14 der jeweiligen Speichen 2 zugeordnet. Bei der Vermessung der Messpositionen 18 kommt es zur Erfassung von 3D-Ist-Positionsdaten der jeweiligen Oberfläche 14 der jeweiligen Speiche 2, wie in Zusammenschau mit Fig. 3 erläutert.

In Fig. 2c sind beispielhaft zwei Querschnittsgeometrien bzw. Eingangskonturen 16 zweier unterschiedlicher Kfz-Felgen 1 bzw. Speichen 2 dargestellt um eine Abweichung der Lage- und/oder Position der Speiche 2 ausgehend von der Ursprungskontur 15 zu verdeutlichen. Durch die Vermessung der zumindest zwei Oberflächen 14 wird eine etwaige lokale Abweichung oder Lageverschiebung der 3D-Ist-Positionsdaten der jeweiligen Speichen im Raum relativ zu einer vorgebbaren Bezugskoordinate deutlich. Siehe vergleichend Fig. 3. Da es bei der Vermessung der Oberflächen durch das zumindest eine optische Erfassungsmittel 8 zu Ungenauigkeiten im Bereich gratbehafteter Kanten 11 kommen kann, ist die Eingangskontur 16, welche von den optischen Erfassungsmitteln 8 erfasst wird, zu Anfang der Messung noch unvollständig. Derartige durch zum Beispiel Abschattung entstehende Ungenauigkeiten an gratbehafteten Kanten 11 sind durch gepunktete Linien angedeutet. Eine sinngemäße Übertragung dieses Prinzips obliegt dem Fachmann für sämtliche nicht näher dargestellten Teile einer Kfz-Felge 1, wie etwa Längskonturen 23 oder Hinterschneidungen 6, welche u. U. nicht vom optischen Erfassungsmittel 8 direkt vermessen werden können.

In Fig. 2d ist ein weiterer Verfahrensschritt schematisch angedeutet. Es wird die "optimale" bzw. Soll-Geometrie 17 der zu bearbeitenden Speiche 2 im korrespondierenden lokalen Querschnitt dargestellt. Die Bereitstellung eines 3D-Modells der Soll-Geometrie 17 erfolgt in einer nicht dargestellten Anlagensteuerung, und kann z.B. als 3D-CAD Daten vorab erfolgen oder auch durch eine Vermessung eines Musterteils durch die optischen Erfassungsmittel 8 durchgeführt werden. Die für Fig. 2a und 2c und Fig. 3 genannte Vermessung der Oberflächen 14 an den Messpositionen 18 erfolgt sowohl in Umfangsrichtung 21 als auch in Radialrichtung 22, wodurch auf einfache Weise ein Abgleich der Messdaten bzw. 3D-Ist-Positionsdaten mit der Soll-Geometrie 17 am "gleichen" lokalen Querschnitt einer Speiche 2 durchgeführt werden kann. Nach der in Fig. 2b und 2c schematisch dargestellten Vermessung der Eingangskontur 16 erfolgt erfindungsgemäß ein Abgleich der erfassten 3D-Ist-Positionsdaten mit den in Fig. 2d schematisch angedeuteten 3D-Modell der Soll-Geometrie 17. Die vermessenen Oberflächen 14 bzw. die korrespondierenden 3D-Ist-Positionsdaten werden fiktiv in lokale Einzelquerschnitte der Speiche 2 zerlegt. Miteinander korrespondierende Einzelquerschnitte der Eingangskontur 16 und des 3D-Modells der Soll-Geometrie 17 werden miteinander rechnerisch verglichen. Die Zusammenschau mit Fig. 3 verdeutlicht dieses Mess- und Vergleichsprinzip.

In Fig. 3 sind eine Mehrzahl von Messpositionen 18 an zumindest zwei, im dargestellten Fall drei, Oberflächen 14 ersichtlich. Die Messpositionen 18 sind durch Kreise angedeutet. Im Gegenzug sind die gratbehafteten ungenau erfassten Kanten 11 punktiert angedeutet. Erfindungsgemäß kann nun durch rechnerische Vervollständigung der Eingangskontur 16 durch Extra- und/oder Interpolation der 3D-Ist-Positionsdaten der Messpositionen 18 auf die ungenau erfassten Bereiche rückgeschlossen werden. Die dabei ermittelten Extra- bzw. Interpolationspositionen 19 sind mittels Kreuzen schematisch angedeutet. Es versteht sich aus dem erläuterten Prinzip von selber, dass die Messpositionen 18 und ermittelten Extra- bzw. Interpolationspositionen 19 sowohl jeweils einzelne Punkte, als auch Linien oder Flächen sein können. Durch das zuvor beschriebene "Matching", also ein fiktives Hineinlegen der vermessenen Oberflächenbereiche in das 3D-Modell der Soll-Geometrie 17, kann auf relativ einfache Weise eine Vervollständigung der Eingangskontur 16 berechnet werden. Auf die gleiche Weise ist die Ermittlung der realen Position von Längskanten bzw. Längskonturen 23 wie auch von Hinterschneidungen 6 möglich.

Anschließend an den Abgleich der erfassten 3D-Ist-Positionsdaten mit dem 3D-Modell der Soll-Geometrie 17 und der rechnerischen Vervollständigung der Eingangskontur 16 kann eine Berechnung von 3D-Bearbeitungsdaten 24 einer Fertigkontur durchgeführt werden. Ein Beispiel einer derartigen Fertigkontur 20 ist in Fig. 2e angedeutet. Die 3D-Bearbeitungsdaten 24 der Fertigkontur 20 können dabei vorgebbare Fasen 25 und/oder Kantenverrundungen aufweisen, wie in Fig. 2e angedeutet.

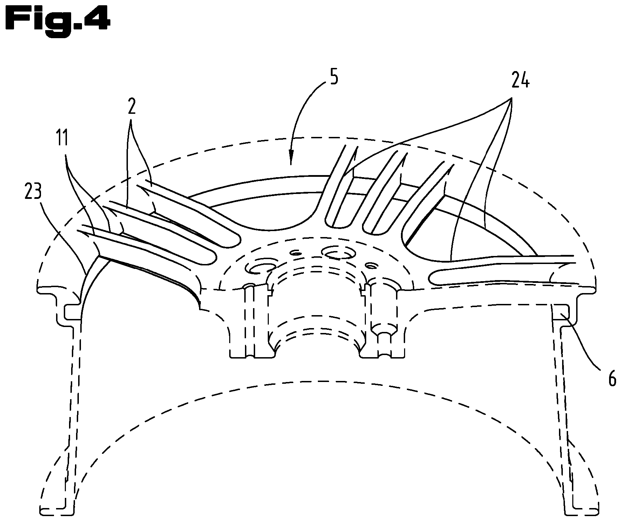

Die berechneten 3D-Bearbeitungsdaten 24 der Fertigkontur 20 werden in der Anlagensteuerung bereitgestellt. Eine schematische Darstellung derartiger 3D-Bearbeitungsdaten 24 einer möglichen Fertigkontur 20 sind als durchgezogene Linie in Fig. 4 ersichtlich. Die Kfz-Felge der Fig. 4 ist dabei die gleiche wie in Fig. 1. Wie aus Fig. 4 ebenso zu sehen, sind zur Herstellung der Fertigkontur 20 einer Kfz-Felge 1 nicht alle möglichen Kanten einer Kfz-Felge 1 notwendigerweise auch zu bearbeiten. Die Erstellung und Berechnung der Fertigkontur 20 bzw. der 3D-Bearbeitungsdaten 24 muss sich daher nicht zwingend über die gesamte Eingangskontur 16 der Kfz-Felge 1 erstrecken. Es kann unter gewissen Umständen ausreichend sein, wenn lediglich die für die nachfolgende Nachbearbeitung relevanten Teile der Kfz-Felge 1 als Eingangskontur 16 vollständig berechnet und später zu 3D-Bearbeitungsdaten 24 und/oder der Fertigkontur 20 berechnet werden.

Wie aus Fig. 4 ableitbar können die 3D-Bearbeitungsdaten 24 dazu verwendet werden um eine, bevorzugt mehrachsig ausgebildete, nicht dargestellte Bearbeitungsvorrichtung zur Herstellung der Fertigkontur 20 an einer Kfz-Felge 1 zu steuern. Als besonders vorteilhaft wird hierbei der Einsatz von Fräs- oder Laserbearbeitung erwogen.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Kfz-Felge
- 2: Speiche
- 3: Felgenfenster
- 4: Mittenbohrung
- 5: Anlagefläche
- 6: Hinterschneidung
- 7: Rotationsachse
- 8: Erfassungsmittel
- 9: Außenseite
- 10: Innenseite
- 11: Kante
- 12: Bearbeitungsrichtung
- 13: Grat
- 14: Oberfläche
- 15: Ursprungskontur
- 16: Eingangskontur
- 17: Soll-Geometrie
- 18: Messposition
- 19: Extrapolations-/Interpolationsposition
- 20: Fertigkontur
- 21: Umfangsrichtung
- 22: Radialrichtung
- 23: Längskontur
- 24: 3D- Bearbeitungsdaten
- 25: Fase

## Patentansprüche

1. Verfahren zur Erstellung von 3D-Bearbeitungsdaten (24) für eine dreh- und/oder fräsbearbeitete Kfz-Felge (1), umfassend die Verfahrensschritte:
- Bereitstellen einer mehrere Speichen (2) aufweisenden, dreh- und/oder fräsbearbeiteten Kfz-Felge (1) mit einer Eingangskontur (16), wobei es sich bei der Eingangskontur (16) um die Kontur der vorbearbeiteten Kfz-Felge (1) handelt, und einer Außen- bzw. Sichtseite (9), und einer Innen- bzw. Achsseite (10), und zumindest einem an einer Kante (11) anhaftenden Grat (13);
- Bereitstellen eines 3D-Modells der Soll-Geometrie (17) der zu bearbeitenden Kfz-Felge (1) in einer Anlagensteuerung;
- Vermessung der Innen- und Außenseite (9, 10) an vorgebbaren Messpositionen (18) an zumindest zwei, bevorzugt drei, Oberflächen (14) der jeweiligen Speichen (2) zur Erfassung von 3D-Ist-Positionsdaten der Eingangskontur (16) mittels zumindest eines optischen Erfassungsmittels (8);
- Abgleich der erfassten 3D-Ist-Positionsdaten mit dem 3D-Modell der Soll-Geometrie (17) und rechnerische Vervollständigung der erfassten 3D-Ist-Positionsdaten der Eingangskontur (16) durch Extra- und/oder Interpolation der 3D-Ist-Positionsdaten;
- Berechnung von 3D-Bearbeitungsdaten (24) zur Erzielung einer Fertigkontur (20) der Kfz-Felge (1) anhand der vervollständigten 3D-Ist-Positionsdaten der Eingangskontur (16);
- Bereitstellung der 3D-Bearbeitungsdaten (24) in der Anlagensteuerung, wobei die Vervollständigung der 3D-Ist-Positionsdaten der Eingangskontur (16) der in ursprünglicher Bearbeitungsrichtung (12) der Kfz-Felge (1) abgewandten, gratbehafteten Kanten (11) durch Extra- und/oder Interpolation der erfassten 3D-Ist-Positionsdaten der in ursprünglicher Bearbeitungsrichtung (12) nächstliegenden Seiten bzw. Oberflächen (14) der Speichen (2) anhand des 3D-Modells der Soll-Geometrie (17) erfolgt.

2. Verfahren nach Anspruch 1 **dadurch gekennzeichnet, dass** während der Vermessung der Innen- und/oder Außenseite (9) eine zusätzliche Erfassung der 3D-Ist-Positionsdaten von, sich im Wesentlichen in Umfangsrichtung (21) erstreckenden, Längskonturen (23), insbesondere Längskanten, vorzugsweise Felgenfensterkonturen (3), erfolgt und in die Berechnung der 3D-Bearbeitungsdaten (24) miteinbezogen wird.

3. Verfahren nach einem der vorhergehenden Ansprüche **dadurch gekennzeichnet, dass** bei der Vervollständigung der 3D-Ist-Positionsdaten der Eingangskontur (16) etwaige, der Vermessung durch das zumindest eine optische Erfassungsmittel (8) unzugängliche Hinterschneidungen (6), aus dem 3D-Modell der Soll-Geometrie (17) miteinbezogen werden.

4. Verfahren nach einem der vorhergehenden Ansprüche **dadurch gekennzeichnet, dass** zur Vermessung der Innen- und/oder Außenseite (9) zumindest ein optisches Erfassungsmittel (8), welches einen Punkt- oder Linienlaser oder Streifenlichtprojektor umfasst, verwendet wird.

5. Verfahren nach einem der vorhergehenden Ansprüche **dadurch gekennzeichnet, dass** die Vermessung der Innen- und/oder Außenseite (9) mittels jeweils zumindest einem optischen Erfassungsmittel (8), vorzugsweise gleichzeitig, erfolgt.

6. Verfahren nach einem der vorhergehenden Ansprüche **dadurch gekennzeichnet, dass** vor der Vermessung eine Aufspannung der Kfz-Felge (1) an einer, vorzugsweise mehrachsig beweglichen, Aufspannvorrichtung derart erfolgt, dass eine direkte Sichtverbindung des zumindest einen optischen Erfassungsmittels Oberflächen (14) der Speichen (2) an zumindest einer Innen- und/oder Außenseite (9) gegeben ist.

7. Verfahren nach Anspruch 6 **dadurch gekennzeichnet, dass** die Aufspannung an der Mittenbohrung (4), vorzugsweise unter zumindest teilweiser Kontaktierung einer an die Mittenbohrung (4) in Radialrichtung (22) angrenzenden Anlagefläche (5), durchgeführt wird.

8. Verfahren nach einem der vorhergehenden Ansprüche **dadurch gekennzeichnet, dass** zur Vermessung der Innen- und/oder Außenseite (9) eine Bewegung der Kfz-Felge (1) relativ zum zumindest einen optischen Erfassungsmittel (8) durchgeführt wird.

9. Verfahren nach einem der vorhergehenden Ansprüche **dadurch gekennzeichnet, dass** zur Vermessung der Innen- und/oder Außenseite (9) eine Bewegung des zumindest einen optischen Erfassungsmittel (8) relativ zur Kfz-Felge (1) durchgeführt wird.

10. Verfahren nach einem der vorhergehenden Ansprüche **dadurch gekennzeichnet, dass** die Kfz-Felge (1) im Anschluss an die Bereitstellung der 3D-Bearbeitungsdaten (24) für die Fertigkontur (20) in der Anlagensteuerung während der Herstellung der Fertigkontur (20) auf der Aufspannvorrichtung verbleibt.

11. Verfahren nach einem der vorhergehenden Ansprüche **dadurch gekennzeichnet, dass** die Bereitstellung des 3D-Modells der Soll-Geometrie (17) durch Vermessung eines Musterteils erfolgt.

12. Verfahren nach einem der vorhergehenden Ansprüche **dadurch gekennzeichnet, dass** im Anschluss an die Bereitstellung der 3D-Bearbeitungsdaten (24) für die Fertigkontur (20) in der Anlagensteuerung die nachfolgende Herstellung der Fertigkontur (20) mittels einer Fräs- oder Laserbearbeitung durchgeführt wird.

## Claims

1. A method for generating 3D machining data (24) for a motor vehicle rim (1) machined by turning and/or milling, comprising the method steps:
- providing a motor vehicle rim (1) with an initial contour (16), having one or multiple spokes (2) and being machined by turning and/or milling, wherein the initial contour (16) is the contour of a pre-machined motor vehicle rim (1), as well as an outer and/or visible side (9) and an inner and/or axle side (10) and at least one burr (13) attached to an edge (11);
- providing a 3D model of a target geometry (17) of the motor vehicle rim (1) to be machined in a system control;
- measuring the inner and outer sides (9, 10) at predefinable measuring positions (18) on at least two, preferably three, surfaces (14) of the respective spokes (2) for detecting 3D actual position data of the initial contour (16) by means of at least one optical detection means (8);
- comparing the detected 3D actual position data to the 3D model of the target geometry (17) and computational integration of the detected 3D actual position data of the initial contour (16) by means of extrapolation and/or interpolation of the 3D actual position data;
- calculating 3D machining data (24) for achieving a finished contour (20) if the motor vehicle rim (1) with the aid of the integrated 3D actual position data of the initial contour (16);
- providing the 3D machining data (24) in the system control, wherein
the integration of the 3D actual position data of the initial contour (16) of the burred edges (11) facing away from the motor vehicle rim (1) in the initial machining direction (12) is carried out by means of extrapolation and/or interpolation of the detected 3D actual position data of the closest sides and/or surfaces (14) of the spokes (2) in the initial machining direction (12) with the aid of the 3D model of the target geometry (17).

2. The method according to claim 1, **characterized in that** during the measurement of the inner and/or outer side (9), an additional detection of the 3D actual position data of longitudinal contours (23), in particular longitudinal edges, preferably rim window contours (3), extending essentially in the circumferential direction (21) takes place and is included into the calculation of the 3D machining data (24).

3. The method according to one of the preceding claims, **characterized in that** in the integration of the 3D actual position data of the initial contour (16), possible undercuts (6) inaccessible for measurement by the at least one optical detection means (8) are included from the 3D model of the target geometry (17).

4. The method according to one of the preceding claims, **characterized in that** at least one optical detection means (8), which comprises a spot or line laser or structured light projector, is used for measuring the inner and/or outer side (9).

5. The method according to one of the preceding claims, **characterized in that** the measurement of the inner and/or outer side (9) in each case takes place by means of at least one optical detection means (8), preferably simultaneously.

6. The method according to one of the preceding claims, **characterized in that** prior to measuring, a clamping operation of the motor vehicle rim (1) takes place on a clamping device, which is preferably movable on multiple axes, such that a direct line of sight of the at least one optical detection means to surfaces (14) of the spokes (2) exists on at least one inner and/or outer side (9).

7. The method according to claim 6, **characterized in that** the clamping operation is carried out at the center bore (4), preferably while at least partially contacting a contact surface (5) bordering the center bore (4) in the radial direction (22).

8. The method according to one of the preceding claims, **characterized in that** for measuring the inner and/or outer side (9), a movement of the motor vehicle rim (1) relative to the at least one optical detection means (8) is carried out.

9. The method according to one of the preceding claims, **characterized in that** for measuring the inner and/or outer side (9), a movement of the at least one optical detection means (8) relative to the motor vehicle rim (1) is carried out.

10. The method according to one of the preceding claims, **characterized in that**, subsequent to the provision of the 3D machining data (24) for the finished contour (20) in the system control, the motor vehicle rim (1) remains on the clamping device during the production of the finished contour (20).

11. The method according to one of the preceding claims, **characterized in that** the provision of the 3D model of the target geometry (17) is carried out by means of measuring a sample part.

12. The method according to one of the preceding claims, **characterized in that**, subsequent to the provision of the 3D machining data (24) for the finished contour (20) in the system control, the subsequent production of the finished contour (20) is carried out by means of machining by milling or by laser.

## Revendications

1. Procédé de création de données d'usinage 3D (24) pour une jante de véhicule automobile tournée ou fraisée (1), comprenant les étapes suivantes :
- mise à disposition d'une jante de véhicule automobile tournée ou fraisée (1) comprenant plusieurs rayons (2), avec un contour d'entrée (16), dans lequel le contour d'entrée (16) est le contour de la jante de véhicule automobile (1) pré-usinée, et un côté externe ou visible (9) et un côté interne ou d'essieu (10), et au moins une arête (13) adhérant à un bord (11) ;
- mise à disposition d'un modèle 3D de la géométrie souhaitée (17) de la jante de véhicule automobile (1) à usiner dans une commande de machine ;
- mesure des côtés interne et externe (9, 10) à des positions de mesures (18) prédéterminée sur au moins deux, de préférence trois, surfaces (14) des rayons (2) respectifs pour la saisie des données de position 3D réelles du contour d'entrée (16) au moyen d'au moins un moyen de détection optique (8) ;
- comparaison des données de position 3D réelles avec le modèle 3D de la géométrie souhaitée (17) et complément par calcul des données de position 3D réelles du contour d'entrée (16) par extrapolation et/ou interpolation des données de position 3D réelles ;
- calcul des données d'usinage 3D (24) afin d'obtenir un contour fini (20) de la jante de véhicule automobile (1) à l'aide des données de position 3D réelles complétées du contour d'entrée (16) ;
- mise à disposition des données d'usinage 3D (24) dans la commande de la machine, dans lequel le complément des données de position 3D réelles du contour d'entrée (16) des bords (11) opposés, munis d'une arête, dans la direction d'usinage initiale (12) de la jante de véhicule automobile (1) a lieu par extrapolation et/ou interpolation des données 3D réelles saisies des côtés ou surfaces (14) les plus proches, dans la direction d'usinage initiale (12), des rayons (2), à l'aide du modèle 3D de la géométrie souhaitée (17).

2. Procédé selon la revendication 1, **caractérisé en ce que**, pendant la mesure du côté interne et/ou externe (9), a lieu une saisie supplémentaire des données de position 3D réelles de contours longitudinaux (23) s'étendant globalement dans la direction de la circonférence (21), plus particulièrement des arêtes longitudinales, de préférence des contours de fenêtres de jante (3) et est prise en compte dans le calcul des données d'usinage 3D (24).

3. Procédé selon l'une des revendications précédentes, **caractérisé en ce que**, lors du complément des données de position 3D réelles du contour d'entrée (16), les éventuelles contre-dépouilles (6), inaccessibles à la mesure par l'au moins un moyen de détection optique (8) et provenant du modèle 3D de la géométrie souhaitée (17), sont prises en compte.

4. Procédé selon l'une des revendications précédentes, **caractérisé en ce que**, pour la mesure du côté interne et/ou externe (9), on utilise au moins un moyen de détection optique (8) qui comprend un laser ponctuel ou linéaire ou un projecteur à lumière rasante.

5. Procédé selon l'une des revendications précédentes, **caractérisé en ce que** la mesure du côté interne et/ou externe (9) a lieu au moyen d'au moins moyen de détection optique (8), de préférence de manière simultanée.

6. Procédé selon l'une des revendications précédentes, **caractérisé en ce que**, avant la mesure, a lieu un serrage de la jante de véhicule automobile (1) à un dispositif de serrage, mobile de préférence sur plusieurs axes, de façon à ce qu'une visualisation directe des surfaces (14) des rayons (2) au niveau d'au moins un côté interne et/ou externe (9) soit possible à l'aide de l'au moins un moyen de détection optique.

7. Procédé selon la revendication 6, **caractérisé en ce que** le serrage est effectué au niveau de l'alésage central (4), de préférence avec un contact au moins partiel d'une surface d'appui (5) adjacente à l'alésage central (4) dans la direction radiale (22).

8. Procédé selon l'une des revendications précédentes, **caractérisé en ce que**, pour la mesure du côté interne et/ou externe (9), un déplacement de la jante de véhicule automobile (1) est effectué par rapport à l'au moins un moyen de détection optique (8).

9. Procédé selon l'une des revendications précédentes, **caractérisé en ce que**, pour la mesure du côté interne et/ou externe (9), un déplacement de l'au moins un moyen de détection optique (8) est effectué par rapport à la jante de véhicule automobile (1).

10. Procédé selon l'une des revendications précédentes, **caractérisé en ce que** la jante de véhicule automobile (1), après la mise à disposition des données d'usinage 3D (24) pour le contour fini (20), reste dans commande de la machine, pendant la réalisation du contour fini (20), sur le dispositif de serrage.

11. Procédé selon l'une des revendications précédentes, **caractérisé en ce que** la mise à disposition du modèle 3D de la géométrie souhaitée (17) a lieu par la mesure d'une pièce modèle.

12. Procédé selon l'une des revendications précédentes, **caractérisé en ce que**, après la mise à disposition des données d'usinage 3D (24) pour le contour fini (20) dans la commande de la machine, la réalisation suivante du contour fini (20) est effectuée au moyen d'un usinage par fraisage ou par laser.
